# EUROPÄISCHE PATENTSCHRIFT

(11) **EP 3 165 395 B1**
(45) Veröffentlichungstag und Bekanntmachung des Hinweises auf die Patenterteilung: **27.02.2019**
(21) Anmeldenummer: 16002315.6
(22) Anmeldetag: 28.10.2016
(51) Int. Cl.: B60K 17/36, B60K 17/354, B60K 17/356, B60K 7/00, B60K 1/00

(54) **NUTZFAHRZEUG, INSBESONDERE LKW, MIT MINDESTENS EINEM DOPPELACHSAGGREGAT**
COMMERCIAL VEHICLE, ESPECIALLY HEAVY GOODS VEHICLE, WITH AT LEAST ONE TWIN AXLE UNIT
VÉHICULE UTILITAIRE, EN PARTICULIER POIDS LOURD, COMPRENANT AU MOINS UN GROUPE D'ESSIEU JUMELÉ

(30) Priorität: 04.11.2015 DE 102015014213
(43) Veröffentlichungstag der Anmeldung: 10.05.2017
(73) Patentinhaber: MAN Truck & Bus AG, 80995 München (DE)
(72) Erfinder: Wagner, Philipp, 86316 Friedberg (DE); Fleischhacker, Jan, 82140 Olching (DE); Beierer, Philipp, 85302 Gerolsbach (DE); Peter, Michael, 83512 Wasserburg (DE); Resch, Franz-Georg, 82299 Türkenfeld (DE)
(74) Vertreter: v. Bezold & Partner Patentanwälte - PartG mbB

(56) Entgegenhaltungen:
- EP-A2- 2 559 581
- DE-A1-102008 030 581
- DE-A1-102013 001 254
- US-A1- 2009 166 106
- US-A1- 2011 094 807
- US-A1- 2015 247 404
- US-A1- 2015 251 533

## Beschreibung

Die Erfindung betrifft Nutzfahrzeug, insbesondere einen Lastkraftwagen (LKW) oder einen Omnibus, mit mindestens einem Doppelachsaggregat.

Aus dem Stand der Technik sind Nutzfahrzeuge, insbesondere LKWs, bekannt, die ein Doppelachsaggregat mit zwei angetriebenen Achsen aufweisen. Ein Doppelachsaggregat wird auch als sogenannte Tandemachse bezeichnet. Bei einem Doppelachsaggregat beträgt der Achsabstand in der Regel weniger als 2 Meter, siehe beispielsweise Nutzfahrzeugtechnik: Grundlagen, Systeme, Komponenten, ISBN 978-3-8348-1795-2, Stefan Breuer (Hrsg.), Springer Vieweg, 2012. Der Achslastausgleich zwischen den beiden angetriebenen Achsen kann entweder über ein schwenkbares Mittellager erfolgen, d. h., die Achsen sind über eine Wippe miteinander verbunden bzw. über ein mittiges Lager gegeneinander verschwenkbar. Diese Ausführungsformen sind als sogenannte blattgefederte Doppelachsaggregate bekannt. Es sind jedoch auch luftgefederte Doppelachsaggregate bekannt, bei denen die Fahrzeugniveauregulierung über Wegaufnehmer gesteuert wird, d. h., die Verschränkung der beiden Achsen des Doppelachsaggregats zueinander stellt sich über den Luftdruck ein. Die Räder eines Doppelachsaggregats sind in der Regel gleichartig, d. h. alle entweder einfach oder doppelbereift und nicht lenkbar.

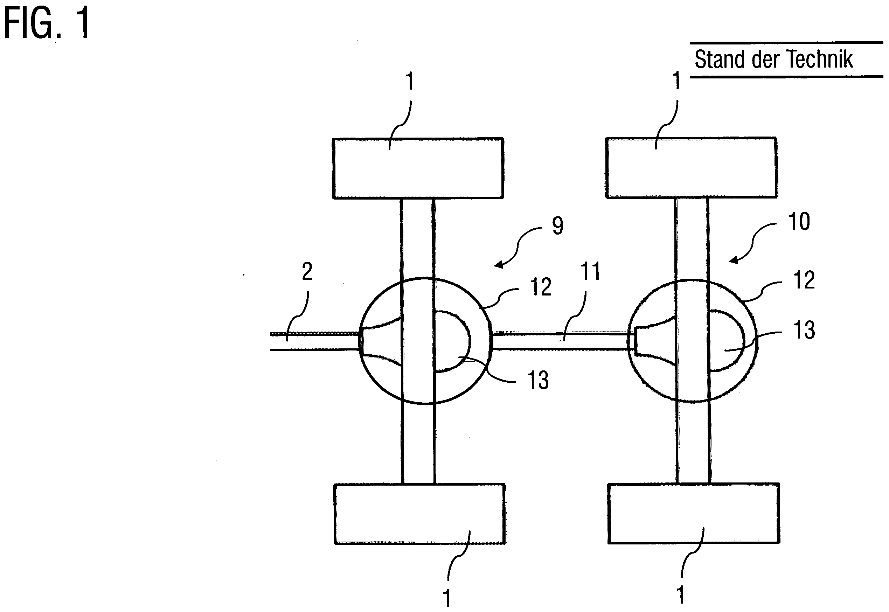

Figur 1 zeigt eine vereinfachte Darstellung eines herkömmlichen Doppelachsaggregats mit zwei angetriebenen Achsen 9, 10, wobei die Anbindung der Achsen an einem Tragrahmen des Fahrzeugs, z. B. mittels einer Blattfederung, nicht dargestellt ist. Die in Fahrtrichtung des Fahrzeugs gesehene vordere Achse 9 des Doppelachsaggregats wird über eine Antriebswelle 2, die zwischen dem Verbrennungsmotor/Getriebe-Aggregat des Fahrzeugs und dem Doppelachsaggregat angeordnet ist, angetrieben. Ein auf der Antriebswelle angeordnetes Antriebskegelrad steht dabei in Eingriff mit einem Tellerrad eines Achsdifferentials 13 der vorderen Achse 9 des Doppelachsaggregats.

Zum Antrieb der zweiten Achse 10 des Doppelachsaggregats ist eine Durchtriebsachse bzw. eine Gelenkwelle 11 zwischen den beiden Achsen 9, 10 des Doppelachsaggregats vorgesehen.

Aus dem Stand der Technik sind ferner Nutzfahrzeuge bekannt, die zumindest zwei hydraulische Radmotoren zum Antreiben von zumindest zwei Rädern aufweisen. Die zumindest zwei Radmotoren sind in einen geschlossenen hydrostatischen Kreislauf integriert. Damit können gegenüber Fahrzeugen mit permanentem Allradantrieb erhebliche Gewichts- und Effizienzvorteile realisiert werden, insbesondere in Fahrzeugen, bei denen der Allradantrieb nur für einen kleinen Teil der tatsächlichen Fahrtstrecke benötigt wird.

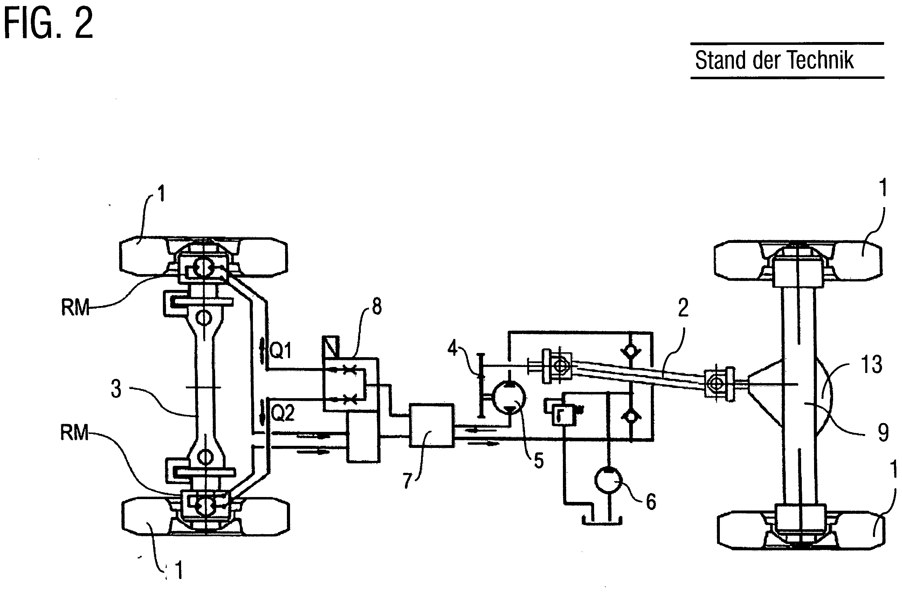

Figur 2 zeigt eine schematische Darstellung eines solchen aus dem Stand der Technik bekannten Antriebssystems, wie es z. B. aus der Druckschrift EP 1 886 861 A2 bekannt ist. Das Antriebssystem umfasst eine herkömmliche, mechanisch über eine Antriebswelle 2 angetriebene Hinterachse 9, wobei die Antriebswelle 2 mit einem Achsdifferential 13 der Hinterachse 9 in Wirkverbindung steht. Das Antriebssystem umfasst ferner zumindest zwei mittels hydraulischer Radmotoren RM antreibbare Vorderräder 1, die lenkbar an einer Vorderachse 3 angeordnet sind. Die zwei Radmotoren RM sind in einen geschlossenen hydrostatischen Kreislauf integriert. Dabei wird eine Hauptpumpe 5 mechanisch über den Triebstrang 4 des Fahrzeugs angetrieben. Durch ein Steuerventil 7 können die zwei Radmotoren RM zugeschaltet werden. Außerdem kann eine Speisepumpe 6 angeordnet sein, um auftretende interne und externe Leckagemengen zu kompensieren. Im Hydraulikkreislauf kann für die Vorderräder 1 ein als hydraulisches Querdifferential wirkender, durch einen Steuerblock geregelter Druckölverteiler 8 angeordnet sein, der eine Aufteilung der Ölversorgung der Radmotoren RM in zweckmäßig gleichgroße Ölströme Q1 und Q2 bewirkt. Auf diese Weise wird eine hydraulisch wirkende Quersperre realisiert. Aus der EP 2 559 581 A2 ist ein Antriebssystem mit hydrostatischem Zusatzantrieb bekannt, das sich von dem in Figur 2 beschriebenen im Wesentlichen dadurch unterscheidet, dass anstatt dem als hydraulisches Querdifferential wirkenden Druckölverteiler 8 ein Bremssystem so ausgeführt ist, dass es als Sperrdifferential für die Vorderräder 1 wirkt. Aus der Offenlegungsschrift US 2015/0247404 A1 ist eine hydraulische Vorrichtung bekannt, beispielsweise zur Verwendung als hydraulischer Motor eines hydrostatischen Antriebs zum Antrieb einer Fahrzeugachse. Insbesondere wird die konstruktive Umsetzung der Zuschaltung eines hydrostatischen Motors auf der Ebene des Radmotors selbst beschrieben. Der hydrostatische Radantrieb mit ausfahrbaren Kolben besteht aus einer Nabe (fest), einem Rad (beweglich) und einer Antriebsvorrichtung (Radialkolbenmotor mit ausfahrbaren Kolben). Die Antriebsvorrichtung ist dabei so gestaltet, dass diese fest mit Nabe oder Rad verbunden ist und über ausfahrbare Kolben ein Drehmoment auf den jeweils anderen Partner ausüben kann. Insbesondere wird vorgeschlagen, die feste Verbindung mit Rad bzw. Nabe zu eliminieren, z. B. durch eine Kupplung, d. h., bei Bedarf kann sich die Antriebseinrichtung frei zu Nabe und Rad drehen.

Aus dem Stand der Technik sind auch Antriebskonzepte mit zuschaltbaren hydraulischen bzw. elektrischen Motoren für Nutzfahrzeuge mit mehr als zwei Achsen bekannt. So offenbart die Offenlegungsschrift DE 10 2013 001 254 A1 ein Fahrzeug, das neben einer lenkbaren Vorderachse und einer mittels eines Verbrennungsmotors angetriebene Hinterachse eine liftbare Nachlauf- oder Vorlaufachse aufweist. Hierbei sind sowohl die Vorderachse als auch die liftbare Nachlauf- oder Vorlaufachse mit einem hydrostatischen Hilfsantrieb ausgestattet, der in Abhängigkeit von mindestens einer Betriebsgröße des Fahrzeugs automatisch von einer Steuereinheit zugeschaltet werden kann, ohne dass ein Eingreifen des Fahrzeugführers nötig ist. Ferner offenbaren die Offenlegungsschriften DE 10 2008 030 581 A1 und US 2015/0251533 A1 Fahrzeuge mit drei Achsen, die neben einer lenkbaren Vorderachse zwei angetriebenen Hinterachsen umfassen, wobei eine der Hinterachsen von einem Verbrennungsmotor und die zweite Hinterachse über einen Hydraulik- bzw. Elektromotor angetrieben wird. In Abhängigkeit von den Betriebsbedingungen des Fahrzeugs kann hierbei ebenfalls der hydraulische bzw. elektromotorische Antrieb zweitweise zugeschaltet werden.
Für ein Nutzfahrzeug mit Doppelachsaggregat offenbart die Offenlegungsschrift US 2009/0166106 A1, die die im Oberbegriff des Anspruchs 1 genannten Merkmale aufweist, ein Antriebskonzept, bei dem eine der Achsen des Doppelachsaggregats über einen Verbrennungsmotor und die andere über einen Elektromotor oder einen Hydromotor angetrieben wird. Nachteilig daran ist allerdings, dass bei der Umrüstung eines herkömmlichen, mittels eines Durchtriebs angetriebenen Doppelachsaggregats auf einen derartigen elektromotorischen Hilfsantrieb der vorhandene Bauraum nicht optimal genutzt wird bzw. deutliche Veränderungen an der Radaufhängung vorgenommen werden müssen.
Es ist eine Aufgabe der Erfindung, ein Nutzfahrzeug mit einem verbesserten Doppelachsaggregat bereitzustellen, mit dem Nachteile herkömmlicher Doppelachsaggregate vermieden werden können. Die Aufgabe der Erfindung ist es insbesondere, ein Doppelachsaggregat mit zwei angetriebenen Achsen bereitzustellen, mit dem Effizienzvorteile realisiert werden können.
Diese Aufgaben werden durch ein Nutzfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.
Gemäß allgemeinen Gesichtspunkten der Erfindung wird ein Nutzfahrzeug mit mindestens einem Doppelachsaggregat bereitgestellt. Das Doppelachsaggregat weist eine angetriebene erste Achse und eine angetriebene zweite Achse auf. Hierbei wird die erste Achse von dem Antriebsstrang des Nutzfahrzeugs in herkömmlicher Weise angetrieben, wobei beispielsweise die erste Achse mit einer Antriebswelle, die zwischen dem Verbrennungsmotor/Getriebe-Aggregat und der ersten Achse angeordnet ist, bewegungsgekoppelt ist. Eine Besonderheit des erfindungsgemäßen Doppelachsaggregats liegt darin, dass die zweite angetriebene Achse von einem Hilfsantrieb angetrieben wird, der unabhängig von dem Hauptantrieb des Nutzfahrzeugs, der die erste Achse antreibt, zu- und abschaltbar ist und steuerbar ist.

Ein besonderer Vorzug der Erfindung liegt somit darin, dass kein Durchtrieb bzw. keine Gelenkwelle von der ersten Achse zur zweiten Achse des Doppelachsaggregats vorgesehen ist. Auf die aufwändige Durchtriebsachse kann somit verzichtet werden. Ferner können Effizienzvorteile erzielt werden, da der Zusatzantrieb nur in Betriebsphasen zugeschaltet werden kann, in denen er tatsächlich benötigt wird, beispielsweise beim Anfahren auf losem, schlammigem oder eisigem Untergrund.

Gemäß einem besonders bevorzugten Ausführungsbeispiel ist der Hilfsantrieb ein hydrostatischer Hilfsantrieb, so dass die zweite Achse von mindestens einem Hydromotor eines hydrostatischen Antriebs antreibbar ist. Mit einem hydrostatischen Zusatzantrieb können hohe Drehmomente bei vergleichsweise geringem Gewicht der für den hydrostatischen Antrieb benötigten Komponenten erzielt werden.

Bei einem Doppelachsaggregat eines Nutzfahrzeugs sind im Unterschied zu einer Nachlauf-oder Vorlaufachse beide Achsen für gleiche Traglasten ausgelegt. Ferner sind beide Achsen gleichartig bereift, d. h., die Räder der beiden Achsen sind entweder alle doppelbereift oder alle einfach bereift. Die Räder der Achsen des Doppelachsaggregats sind nicht lenkbar. Der Abstand der beiden Achsen in Fahrtrichtung des Nutzfahrzeugs beträgt in der Regel weniger als zwei Meter. Da die zweite Achse hydrostatisch angetrieben wird und nicht mit einem Durchtrieb mit der ersten Achse verbunden ist, kann die zweite Achse als Liftachse ausgeführt sein. In diesem Fall ist die zweite Achse vorzugsweise luftgefedert.

Bei dem Nutzfahrzeug handelt es sich insbesondere um ein Nutzfahrzeug mit einer zulässigen Höchstgeschwindigkeit von über 60 km/h und/oder um ein Nutzfahrzeug, das eine auf mindestens zwei Räder des Nutzfahrzeugs einwirkende Radbremseinrichtung aufweist. Das Nutzfahrzeug ist vorzugsweise ein Lastkraftwagen (LKW) oder ein Omnibus.

Die Bezeichnung "erste Achse" und "zweite Achse" dient lediglich der Unterscheidung der beiden Achsen des Doppelachsaggregats. Gemäß einer bevorzugten Ausführungsform ist die erste Achse die in Bezug auf eine Vorwärtsfahrtrichtung des Fahrzeugs vordere Achse des Doppelachsaggregats und die zweite Achse die in Bezug auf die Fahrtrichtung hintere Achse des Doppelachsaggregats. Gemäß einer alternativen Ausführungsform ist die erste Achse die in Bezug auf eine Vorwärtsfahrtrichtung des Fahrzeugs hintere Achse des Doppelachsaggregats und die zweite Achse die in Bezug auf die Fahrtrichtung vordere Achse des Doppelachsaggregats.

Der hydrostatische Antrieb kann in an sich bekannter Weise eine von einem Antriebsmotor, insbesondere Verbrennungsmotor, angetriebene Hydropumpe und den mindestens einen mit der Hydropumpe über hydraulische Arbeitsleitungen verbundenen Hydromotor umfassen, der zum Antrieb der zweiten Achse des Doppelachsaggregats vorgesehen ist. Sowohl die Hydropumpe als auch der Hydromotor können als hydrostatische Radialkolbenmaschinen ausgebildet sein. Auch eine Ausführung der Hydropumpe oder Hydromotor als Axialkolbeneinheit ist möglich. Insbesondere können sowohl die Hydropumpe als auch der Hydromotor als bauartgleiche Radialkolbenmaschinen ausgebildet sein.

Die Achsen des Doppelachsaggregats können in bekannter Weise als Hypoid- oder Außenplanetenachsen ausgeführt sein.

Nachfolgend werden unterschiedliche Ausgestaltungsformen der Erfindung beschrieben, die die Anordnung des hydraulischen Motors an der zweiten Achse betreffen.

Gemäß eines bevorzugten, jedoch nicht beanspruchten Aspekts kann der Hydromotor außen am Achsgehäuse der zweiten Achse angeflanscht sein, wobei eine Antriebswelle des Hydromotors mit einem im Achsgehäuse angeordneten Achsdifferential der zweiten Achse wirk-verbunden ist. Anstatt das Achsdifferential der zweiten Achse von dem Durchtrieb der ersten Achse anzutreiben, wie es bei den herkömmlichen Doppelachsaggregaten mit zwei angetriebenen Achsen der Fall ist, wird gemäß dieser Ausgestaltungsform das Achsdifferential von einer vom hydraulischen Motor angetriebenen Welle angetrieben. Diese Ausgestaltungsform bietet den Vorteil, dass keine bzw. nur geringe Modifikationen am inneren Aufbau des Achskörpers der zweiten Achse vonnöten sind, um diese anstatt mit dem Durchtrieb von der ersten Achse nun hydrostatisch anzutreiben.

Eine Variante dieses nicht beanspruchten Aspekts sieht vor, dass das Achsdifferential ein Kegelraddifferentialgetriebe ist, aufweisend ein Tellerrad, ein Paar Achskegelräder und ein Paar Ausgleichskegelräder, wobei die Achskegelräder mit den Ausgleichskegelräder kämmen und wobei ein auf einer Antriebswelle des Hydromotors sitzendes Antriebsrad, z. B. ein Antriebskegelrad, mit dem Tellerrad des Achsdifferentials in Eingriff steht.

Gemäß eines weiteren nicht beanspruchten Aspekts kann der Hydromotor im Achsgehäuse der zweiten Achse angeordnet sein bzw. in das Achsgehäuse integriert sein. Der Hydromotor ist somit nicht außen am Achsgehäuse, sondern innerhalb des Achsgehäuses angeordnet. Gemäß dieser Ausgestaltungsform ist ein koaxial zur zweiten Achse rotierbares Teil des Hydromotors mit einem Käfig eines Achsdifferentials der zweiten Achse wirkverbunden. Der Hydromotor treibt somit den Käfig des Achsdifferentials unmittelbar an und nicht mittelbar über ein Tellerrad. Auf ein Tellerrad und auf ein mit dem Tellerrad kämmendes Antriebskegelrad zum Antrieb des Käfigs des Achsdifferentials kann somit auf vorteilhafte Weise verzichtet werden. Der Hydromotor kann auf der Welle des Achsdifferentials sitzen. Ein weiterer Vorteil dieser Ausgestaltungsform ist der geringe beanspruchte Bauraum, da außerhalb des Achsgehäuses der zweiten Achse kein Bauraum zur Anordnung für den Hydromotor benötigt wird.

Eine Variante dieses nicht beanspruchten Aspekts sieht vor, dass in dem Käfig ein Ausgleichsräder tragender Achsbolzen gelagert ist, wobei diese Ausgleichsräder mit auf Radantriebswellen angeordneten Achswellenrädern kämmen und diese Räder als Kegelräder ausgebildet sind. Gemäß dieser Variante ist der Hydromotor als ein an sich bekannter Radialkolbenmotor ausgeführt, aufweisend einen äußeren, feststehenden Kurvenring und ein inneres, umlaufendes Zylindergehäuse, das drehfest mit dem Käfig verbunden ist, um diesen zu rotieren und darüber die zweite Achse anzutreiben.

Gemäß einem allgemeinen Gesichtspunkt der Erfindung sind zwei Hydromotoren zum Antrieb der zweiten Achse vorgesehen, die in das Achsgehäuse integriert sind. Gemäß dieser Ausgestaltungsform weist die zweite Achse zwei koaxial bzw. zueinander fluchtend angeordnete Radantriebswellen auf, die jeweils radseitig mit einem Rad drehfest verbunden sind und andernends mit einem der beiden Hydromotoren wirkverbunden sind. Diese Variante bietet den Vorteil, dass auf ein Achsdifferential verzichtet werden kann, da die beiden Radantriebswellen nicht mehr miteinander bewegungsgekoppelt sind. Die Raddrehzahlen der beiden Räder der zweiten Achse können durch eine entsprechend unterschiedliche Ansteuerung der beiden Hydromotoren angepasst werden. Die beiden Radantriebswellen sind vorzugsweise Steckwellen.

Eine Variante dieser Ausgestaltungsform sieht vor, dass die beiden Hydromotoren in einem mittleren Bereich bzw. in der Mitte des Achsgehäuses der zweiten Achse angeordnet sind. Dies bietet den Vorzug, dass der durch den Wegfall des Achsdifferentials freiwerdende Bauraum zur Anordnung der Hydromotoren genutzt werden kann.

Gemäß einer weiteren Variante können die beiden Hydromotoren jeweils an unterschiedlichen radseitigen Endbereichen des Achsgehäuses der zweiten Achse angeordnet sein. Die Hydromotoren sind somit außen in der Achse angeordnet. Dies bietet den Vorteil, dass keine langen, elastischen Steckwellen benötigt werden. Die Hydromotoren können mit oder ohne einen Außenplanetensatz ihre Antriebsleistung auf die Räder übertragen. Ein Außenplanetensatz zwischen Hydromotor und Radnabe bietet den Vorteil, dass ein höheres Drehmoment erzeugt werden kann. Die beiden Hydromotoren können in Axialrichtung nach innen versetzt zu der jeweiligen Radnabe angeordnet sein. Die beiden Hydromotoren können jedoch auch als Radnabenmotoren ausgeführt sein, d. h. direkt an der Radnabe platziert werden.

Neben der beispielhaft hervorgehobenen Ausführung des erfindungsgemäßen Hilfsantriebs als hydrostatischer Antrieb kann dieser auch als elektrischer Antrieb ausgeführt sein, so dass die zweite angetriebene Achse von mindestens einem Elektromotor anstelle des mindestens einen Hydromotors angetrieben ist. Gemäß dieser alternativen Ausführung des Hilfsantriebs können auch die vorgenannten Ausführungsformen und Varianten umgesetzt werden, wobei jeweils der oder die Hydromotoren durch einen elektrischen Motor zu ersetzen sind. Anstatt einer Hydropumpe und der Fluidleitungen des hydrostatischen Antriebs sind entsprechend ein elektrischer Energiespeicher und/oder ein vom Antriebsstrang angetriebener elektrischer Generator sowie elektrische Leitungen vorzusehen.

Weitere Einzelheiten und Vorteile der Erfindung werden im Folgenden unter Bezug auf die beigefügten Zeichnungen beschrieben. Es zeigen:
- Figur 1: eine schematische Draufsicht auf ein herkömmliches Doppelachsaggregat;
- Figur 2: eine schematische Darstellung eines Antriebssystems für ein Kraftfahrzeug gemäß Stand der Technik mit hydraulisch angetriebenen Radmotoren;
- Figuren 3 und 4: schematische Darstellungen einer hydraulisch angetriebenen Achse eines Doppelachsaggregats gemäß verschiedener, jedoch nicht beanspruchter Aspekte der Erfindung; und
- Figuren 5 und 6: schematische Darstellungen einer hydraulisch angetriebenen Achse eines Doppelachsaggregats gemäß verschiedener Ausführungsformen der Erfindung.

Gleiche oder funktional äquivalente Elemente sind in allen Figuren mit denselben Bezugszeichen bezeichnet.

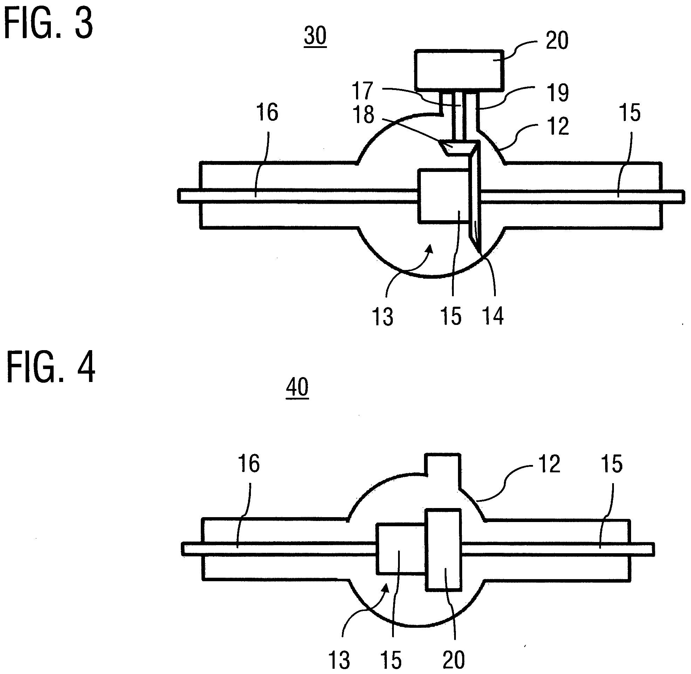

Die in den Figuren gezeigten Aspekte der Ausführungsformen, die gemäß den Figuren 1 und 2 den Stand der Technik und gemäß den Figuren 3 bis 6 die Erfindung betreffen, stimmen teilweise überein, wobei ähnliche oder identische Teile mit den gleichen Bezugszeichen versehen sind und zu deren Erläuterung auch auf die Beschreibung einer oder mehrerer anderer Ausführungsformen verwiesen wird, um Wiederholungen zu vermeiden.

Figur 3 zeigt einen Querschnitt einer stark schematisierten Prinzipdarstellung einer der beiden angetriebenen Achsen 30 eines Doppelachsaggregats eines Nutzfahrzeugs. Vorliegend stellt die Achse 30 die in Vorwärtsfahrtrichtung gesehene hintere Achse des Doppelachsaggregats dar. Die vordere Achse (nicht gezeigt) ist in an sich bekannter Weise ausgeführt und wird über einen mechanischen Antriebsstrang des Nutzfahrzeugs angetrieben, wie dies beispielsweise in Figur 1 gezeigt ist.

Der Achslastausgleich zwischen den beiden angetriebenen Achsen kann entweder über ein schwenkbares Mittellager erfolgen, d. h., die Achsen sind über eine Wippe miteinander verbunden bzw. über ein mittiges Lager gegeneinander verschwenkbar. Diese Ausführungsformen sind als sogenannte blattgefederte Doppelachsaggregate bekannt. Alternativ kann das Doppelachsaggregat als luftgefedertes Doppelachsaggregat ausgeführt sein.

Die zweite Achse 30 weist in an sich bekannter Weise zwei Radantriebswellen 15, 16 auf sowie ein dazwischen angeordnetes Achsdifferential 13 in Form eines üblichen Kegelraddifferentialgetriebes, von dem in Figur 3 nur das Antriebsrad in Form eines Tellerrads 14 und der Käfig 15 gezeigt sind. Im Käfig 15 ist ein Ausgleichsräder tragender Achsbolzen gelagert, wobei die Ausgleichsräder mit auf Radantriebswellen angeordneten Achswellenrädern kämmen (jeweils nicht dargestellt). Die Ausgleichs- bzw. Achswellenräder sind jeweils als Kegelräder ausgebildet. Die von den Radantriebswellen angetriebenen Fahrzeugräder sind ebenfalls nicht dargestellt. Ferner sind in Figur 3 und den nachfolgenden Figuren zur Hervorhebung des erfindungsgemäßen hydrostatischen Antriebs weitere im Achsgehäuse angeordnete Komponenten und Bauteile, wie z. B. Halterungen, Ölsumpf, Staubleche etc., die in üblicher Weise ausgeführt sein können, nicht dargestellt.

Im Unterschied zu der in Figur 1 gezeigten und aus dem Stand der Technik bekannten Ausführung des Doppelachsaggregats ist kein Durchtrieb von der ersten Achse zu der zweiten Achse 30 vorhanden, um das Tellerrad 14 und damit die zweite Achse 30 anzutreiben.

Stattdessen wird die zweite angetriebene Achse 30 von einem Hydromotor 20 eines hydrostatischen Antriebs angetrieben. Der Hydromotor 20 ist außen am Achsgehäuse 12 der zweiten Achse 30 an einem Flanschbereich 19 angeflanscht. Eine vom Hydromotor angetriebene Antriebswelle 17 weist an ihrem distalen Ende ein Antriebskegelrad 18 auf, das mit dem Tellerrad 14 des im Achsgehäuse 12 angeordneten Achsdifferentials 13 der zweiten Achse 30 kämmt. Der Hydromotor 20 ist in einen an sich bekannten geschlossenen hydrostatischen Kreislauf integriert, z. B. analog zu dem in Figur 2 gezeigten Beispiel, wobei eine Hydropumpe mechanisch über den Triebstrang 4 des Fahrzeugs angetrieben wird und über Fluidleitungen hydraulisch mit dem Hydromotor 20 verbunden ist.

Aus dem Stand der Technik sind verschiedene Arten bekannt, die Hydropumpe, z. B. eine Hydrokonstantpumpe, über den mechanischen Antriebsstrang anzutreiben. Beispielsweise kann die Hydropumpe radgetrieben sein und über eine feste mechanische Übersetzung mit den Rädern einer mechanisch angetriebenen Achse verbunden sein. Zwischen dieser Achse und der Hydrokonstantpumpe ist eine Kupplung, z. B. eine Lamellen-Lastschaltkupplung vorgesehen. Bei einer weiteren Variante kann beispielsweise die Brennkraftmaschine des Fahrzeugs (bzw. eine Kurbelwelle der Brennkraftmaschine) über eine Kupplung treibend mit einer Eingangswelle eines leistungsverzweigenden Umlaufrädergetriebes verbunden sein. Das Umlaufrädergetriebe, z. B. in Form eines Planetengetriebes, zweigt die über die Eingangswelle eingehende Leistung in einen hydrostatischen und in einen mechanischen Leistungszweig auf. Insbesondere treibt eine erste Ausgangswelle des Umlaufrädergetriebes unmittelbar ein Ausgleichsgetriebe der ersten Achse des Doppelachsaggregats an und bildet damit den mechanischen Leistungszweig. Eine zweite Ausgangswelle des Umlaufrädergetriebes treibt über eine Zahnradstufe eine Hydropumpe an und bildet damit den hydrostatischen Leistungszweig. Die Hydropumpe wiederum treibt über Hydraulikleitungen den oder die Hydraulikmotoren 20 an. Über ein Steuerventil kann der Hydromotor 20 zu- und abgeschaltet werden. Außerdem kann eine Speisepumpe angeordnet sein, um auftretende interne und externe Leckagemengen zu kompensieren. Unter externen Leckagemengen versteht man im Allgemeinen Mengen, die mit dem bloßen Auge nicht zu erkennen sind. Der Hydromotor 20 und die Hydropumpe sind jeweils als hydrostatische Radialkolbenmaschinen ausgebildet.
Die Figuren 4 bis 6 illustrieren weitere mögliche beanspruchte sowie nicht beanspruchte Ausführungsformen der Erfindung. Hierbei entsprechen Komponenten mit gleichen Bezugszeichen den Komponenten der Figur 3 und werden nicht gesondert beschrieben. Im Folgenden werden nur die Unterschiede und Besonderheiten der Ausführungsformen hervorgehoben.
Eine Besonderheit des in Figur 4 gezeigten nicht beanspruchten Aspekts liegt darin, dass der Hydromotor 20 nicht außen am Achsgehäuse 12 angeflanscht ist, sondern im Innern des Achsgehäuses 12 der zweiten Achse 40 angeordnet ist. Hierbei ersetzt der Hydromotor 20 das Tellerrad 14 und treibt stattdessen direkt den Käfig 15 des Achsdifferentials 13 an. Der Hydromotor 20 ist ein Radialkolbenmotor, aufweisend einen äußeren, feststehenden Kurvenring und ein inneres, umlaufendes Zylindergehäuse, das drehfest mit dem Käfig 15 verbunden ist und diesen somit in eine Rotationsbewegung versetzen kann. In dem Käfig 15 ist wiederum ein Ausgleichsräder tragender Achsbolzen gelagert, wobei diese Ausgleichsräder mit auf Radantriebswellen angeordneten Achswellenrädern kämmen, die jeweils als Kegelräder ausgebildet sind. Die Antriebswelle 17 und das Antriebskegelrad 18 sind daher in der Ausführungsform der Figur 4 ebenfalls nicht notwendig.

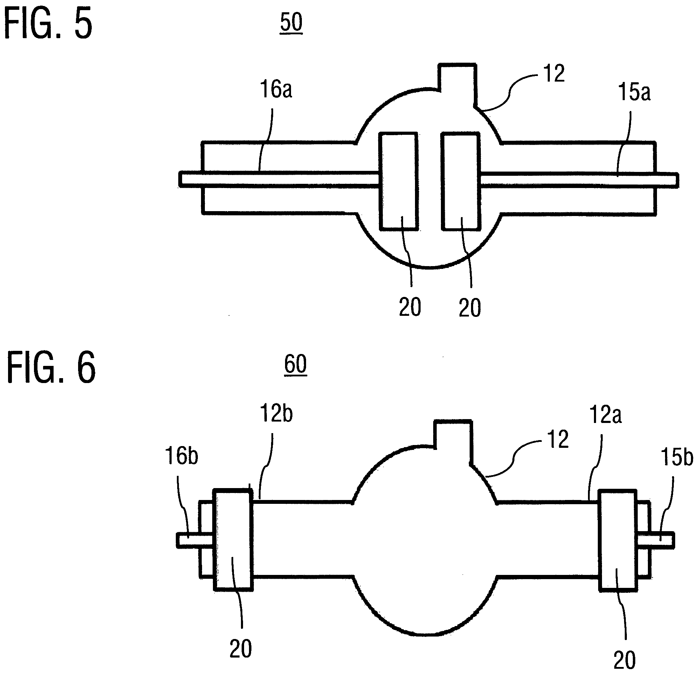

Eine Besonderheit der in Figur 5 gezeigten Ausführungsform liegt darin, dass zwei Hydromotoren 20 in der Mitte des Achsgehäuses 12 der zweiten Achse 50 gelagert sind. Die beiden Radantriebswellen 15a, 16a sind als Steckwellen ausgeführt und radseitig mit einem Rad drehfest verbunden und andernends mit einem der beiden Hydromotoren 20 wirkverbunden. Das Achsdifferential entfällt. Jeder der Radantriebswellen 15a, 16a wird somit von einem der beiden Hydromotoren 20 angetrieben. Die Wirkverbindung zwischen Hydromotor 20 und der Radantriebswelle kann optional auch über ein Außenplanetengetriebe erfolgen, um eine Drehmomenterhöhung zu erzielen.

Eine Besonderheit der in Figur 6 gezeigten Ausführungsform liegt darin, dass die beiden Hydromotoren 20 jeweils an unterschiedlichen radseitigen Endbereichen 12a, 12b des Achsgehäuses 12 der zweiten Achse 60 angeordnet sind. Die Radantriebswellen 15b, 16b sind wieder als Steckwellen ausgeführt, nun aber entsprechend kürzer ausgeführt. Auch bei dieser Ausführungsform ist kein Achsdifferential mehr notwendig, da die Hydromotoren 20 die beiden Radantriebswellen 15b, 16b jeweils unabhängig voneinander antreiben können.

Die Hydromotoren 20 können wahlweise mit oder ohne einen Außenplanetensatz ihre Antriebsleistung auf die Räder übertragen. Die beiden Hydromotoren können in Axialrichtung nach innen versetzt zu der jeweiligen Radnabe angeordnet sein. Die beiden Hydromotoren können jedoch auch als Radnabenmotoren ausgeführt sein, d. h. direkt an der Radnabe platziert werden, analog zu dem in Figur 2 bzw. in der Druckschrift EP 1 886 861 A2 beschriebenen Beispiel.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Rad
- 2: Antriebswelle
- 3: Vorderachse
- 4: Triebstrang
- 5: Hauptpumpe
- 6: Speisepumpe
- 7: Steuerventil
- 8: Druckölverteiler
- 9: Vordere Achse des Doppelachsaggregats
- 10: Hintere Achse des Doppelachsaggregats
- 11: Durchtrieb
- 12: Achsgehäuse
- 13: Achsdifferential, z. B. Kegelraddifferentialgetriebe
- 14: Antriebsrad des Achsdifferentials, z. B. Tellerrad
- 15: Käfig
- 15, 15a, 15b, 16, 16a, 16b: Radantriebswelle
- 17: Antriebswelle
- 18: Antriebskegelrad
- 19: Flanschbereich
- 20: Hydromotor
- 30, 40, 50, 60: Zweite, hydrostatisch angetriebene Achse des Doppelachsaggregats
- RM: Hydraulische Radnabenmotoren

## Patentansprüche

1. Nutzfahrzeug, insbesondere LKW oder Omnibus, mit mindestens einem Doppelachsaggregat, aufweisend eine angetriebene erste Achse (9) und eine angetriebene zweite Achse, wobei die erste Achse (9) über einen mechanischen Antriebsstrang (4) antreibbar ist und die zweite angetriebene Achse (50; 60) von zwei Hydromotoren (20) eines hydrostatischen Antriebs antreibbar ist, wobei die zweite Achse (50; 60) zwei koaxial angeordnete Radantriebswellen (15a, 16a; 15b, 16b) aufweist, die jeweils radseitig mit einem Rad (1) drehfest verbunden sind und andernends mit einem der beiden Hydromotoren (20) wirkverbunden sind, **dadurch gekennzeichnet,**
a) **dass** die beiden Hydromotoren (20) in einem mittleren Bereich eines Achsgehäuses (12) der zweiten Achse (50) angeordnet sind, oder
b) **dass** die beiden Hydromotoren (20) jeweils an unterschiedlichen radseitigen Endbereichen (12a, 12b) eines Achsgehäuses (12) der zweiten Achse (60) angeordnet sind.

2. Nutzfahrzeug nach Anspruch 1, **dadurch gekennzeichnet, dass** der hydrostatische Antrieb eine von einem Antriebsmotor, insbesondere Verbrennungsmotor, angetriebene Hydropumpe und den mindestens einen mit der Hydropumpe über hydraulische Arbeitsleitungen verbundenen Hydromotor (20) umfasst.

3. Nutzfahrzeug nach Anspruch 1, **dadurch gekennzeichnet, dass** die erste Achse die in Bezug auf eine Vorwärtsfahrtrichtung des Fahrzeugs vordere Achse des Doppelachsaggregats ist und die zweite Achse (50; 60) die in Bezug auf die Fahrtrichtung hintere Achse des Doppelachsaggregats ist.

4. Nutzfahrzeug nach einem der vorhergehenden Ansprüche gemäß Variante b) von Anspruch 1, **dadurch gekennzeichnet,**
a) **dass** die beiden Hydromotoren (20) als Radnabenmotoren ausgeführt sind, oder
b) **dass** die beiden Hydromotoren (20) in Axialrichtung versetzt zu der jeweiligen Radnabe angeordnet sind und vorzugsweise über ein Außenplanetengetriebe mit den Rädern in Wirkverbindung stehen.

5. Nutzfahrzeug nach einem der vorhergehenden Ansprüche, **dadurch gekennzeichnet, dass** die erste und/oder zweite Achse des Doppelachsaggregats
a) jeweils für gleiche Traglasten ausgelegt sind; und/oder
b) gleichartig bereift sind; und/oder
c) einen Abstand in Fahrtrichtung des Nutzfahrzeugs von weniger als 2 Meter aufweisen; und/oder
d) als Hypoid- oder Außenplanetenachse ausgeführt sind.

6. Nutzfahrzeug nach einem der vorhergehenden Ansprüche, **dadurch gekennzeichnet, dass** das Nutzfahrzeug ein Nutzfahrzeug mit einer zulässigen Höchstgeschwindigkeit von über 60 km/h ist; und/oder eine auf mindestens zwei Räder des Nutzfahrzeugs einwirkende Radbremseinrichtung aufweist.

## Claims

1. Utility vehicle, in particular motor truck or motor bus, having at least one double-axle unit having a driven first axle (9) and a driven second axle, wherein the first axle (9) can be driven by way of a mechanical drivetrain (4) and the second driven axle (50; 60) can be driven by two hydraulic motors (20) of a hydrostatic drive, wherein the second axle (50; 60) has two wheel drive shafts (15a, 16a; 15b, 16b) which are arranged coaxially and which, in each case, are connected rotationally conjointly at a wheel side to a wheel (1) and, at the other end, are operatively connected to one of the two hydraulic motors (20) **characterized**
a) **in that** the two hydraulic motors (20) are arranged in a central region of an axle housing (12) of the second axle (50), or
b) **in that** the two hydraulic motors (20) are arranged in each case on different wheel-side end regions (12a, 12b) of an axle housing (12) of the second axle (60).

2. Utility vehicle according to Claim 1, **characterized in that** the hydrostatic drive comprises a hydraulic pump, which is driven by a drive engine, in particular internal combustion engine, and the at least one hydraulic motor (20) which is connected to the hydraulic pump by way of hydraulic working lines.

3. Utility vehicle according to Claim 1, **characterized in that** the first axle is the front axle of the double-axle unit in relation to a forward direction of travel of the vehicle, and the second axle (50; 60) is the rear axle of the double-axle unit in relation to the direction of travel.

4. Utility vehicle according to one of the preceding claims according to variant b) of Claim 1, **characterized**
a) **in that** the two hydraulic motors (20) are designed as wheel hub motors, or
b) **in that** the two hydraulic motors (20) are arranged offset with respect to the respective wheel hub in an axial direction and are preferably operatively connected to the wheels by way of an external planetary gear set.

5. Utility vehicle according to one of the preceding claims, **characterized in that** the first and/or second axle of the double-axle unit
a) are in each case designed for equal payloads; and/or
b) have similar tyre configurations; and/or
c) have a spacing of less than 2 metres in the direction of travel of the utility vehicle; and/or
d) are designed as hypoid or external planetary axles.

6. Utility vehicle according to one of the preceding claims, **characterized in that** the utility vehicle is a utility vehicle with an admissible maximum speed of over 60 km/h; and/or has a wheel brake device which acts on at least two wheels of the utility vehicle.

## Revendications

1. Véhicule utilitaire, en particulier camion ou autobus, comprenant au moins un groupe d'essieux jumelés, présentant un premier essieu entraîné (9) et un second essieu entraîné, dans lequel le premier essieu (9) peut être entraîné par une chaîne cinématique mécanique (4) et le second essieu entraîné (50; 60) peut être entraîné par deux moteurs hydrauliques (20) d'un entraînement hydrostatique, dans lequel le second essieu (50; 60) présente deux arbres d'entraînement de roue (15a, 16a; 15b, 16b) coaxialement disposés, qui sont côté roue assemblés sans rotation à une roue (1) et qui sont à l'autre extrémité en liaison active avec un des deux moteurs hydrauliques (20),
**caractérisé en ce que**
a) les deux moteurs hydrauliques (20) sont disposés dans une région centrale d'un carter d'essieu (12) du second essieu (50), ou
b) les deux moteurs hydrauliques (20) sont disposés respectivement sur des régions d'extrémité différentes côté roue (12a, 12b) d'un carter d'essieu (12) du second essieu (60).

2. Véhicule utilitaire selon la revendication 1, **caractérisé en ce que** l'entraînement hydrostatique comprend une pompe hydraulique entraînée par un moteur d'entraînement, en particulier un moteur à combustion interne, et ledit au moins un moteur hydraulique (20) raccordé à la pompe hydraulique par des conduites de travail hydrauliques.

3. Véhicule utilitaire selon la revendication 1, **caractérisé en ce que** le premier essieu est l'essieu avant du groupe d'essieux jumelés par rapport à une direction de marche avant du véhicule et le second essieu (50; 60) est l'essieu arrière du groupe d'essieux jumelés par rapport à la direction de marche.

4. Véhicule utilitaire selon l'une quelconque des revendications précédentes suivant la variante b) de la revendication 1, **caractérisé en ce que**
a) les deux moteurs hydrauliques (20) sont réalisés sous forme de moteurs de moyeu de roue, ou
b) les deux moteurs hydrauliques (20) sont disposés en position décalée en direction axiale vers le moyeu de roue respectif et sont de préférence en liaison active avec les roues par l'intermédiaire d'un engrenage planétaire extérieur.

5. Véhicule utilitaire selon l'une quelconque des revendications précédentes, **caractérisé en ce que** le premier et/ou le second essieu(x) du groupe d'essieux jumelés
a) sont conçus pour des capacités de charge égales; et/ou
b) sont équipés de pneus identiques; et/ou
c) présentent une distance de moins de 2 mètres dans la direction de marche du véhicule utilitaire; et/ou
d) sont réalisés sous forme d'essieux hypoïdes ou d'essieux planétaires extérieurs.

6. Véhicule utilitaire selon l'une quelconque des revendications précédentes, **caractérisé en ce que** le véhicule utilitaire est un véhicule utilitaire avec une vitesse maximale autorisée de plus 60 km/h; et/ou présente un système de freinage de roue agissant sur au moins deux roues du véhicule utilitaire.
